# EUROPÄISCHE PATENTSCHRIFT

(11) **EP 0 490 365 B1**
(45) Veröffentlichungstag und Bekanntmachung des Hinweises auf die Patenterteilung: **15.05.1996**
(21) Anmeldenummer: 91121263.7
(22) Anmeldetag: 11.12.1991
(51) Int. Cl.: B60P 1/64, B60P 3/16, F16D 1/10, B60K 17/28

(54) **Transportfahrzeug mit Wechselaufbau**
Transport vehicle with interchangeable body
Véhicule de transport avec conteneur interchangeable

(30) Priorität: 13.12.1990 DE 4039871
(43) Veröffentlichungstag der Anmeldung: 17.06.1992
(73) Patentinhaber: EMIL DAUTEL GMBH, D-74211 Leingarten (DE)
(72) Erfinder: Dautel, Helmut, W-7105 Leingarten (DE); Schewe, Eckhard, W-7100 Heilbronn (DE); Kilgus, Karlheinz, W-7124 Bönnigheim (DE); Endner, Albert, W-7105 Leingarten (DE)
(74) Vertreter: Clemens, Gerhard, Dr.-Ing.

(56) Entgegenhaltungen:
- EP-A- 0 249 351
- FR-A- 2 221 001
- FR-A- 2 588 678
- US-A- 3 332 298
- US-A- 4 069 885
- US-A- 4 892 430
- PATENT ABSTRACTS OF JAPAN vol. 8, no. 54 (M-282)(1491) 10. März 1984; & JP-A-58 206 435 ( YOKOTA JIDOUSHIYA ) 01 December 1983

## Beschreibung

### TECHNISCHES GEBIET

Die vorliegende Erfindung betrifft ein Transportfahrzeug mit einem Fahrgestell mit Wechselvorrichtung, einem auf das Fahrgestell aufsetzbaren bzw. absetzbaren Wechselaufbau mit zumindest einem anzutreibenden Aggregat, einem Kupplungsstrang zum Anschließen einer fahrzeugseitig vorhandenen treibenden Antriebsvorrichtung an eine wechselaufbauseitig vorhandene anzutreibende Abtriebsvorrichtung oder zum Anschließen einer fahrzeugseitig vorhandenen Steuereinrichtung für die Antriebsvorrichtung an eine wechselaufbauseitig vorhandene Steuereinrichtung und einer innerhalb des Kupplungsstrangs vorhandenen Kupplungsvorrichtung mit Kupplungselementen.

Transportfahrzeuge mit Wechselaufbau werden vielfach eingesetzt, um bei der Nutzung des Transportfahrzeugs variable Einsatzmöglichkeiten zur Verfügung zu haben. Abhängig vom jeweiligen momentanen Einsatzgebiet des Fahrzeugs können unterschiedliche Aufbauten erforderlichenfalls eingesetzt werden, beispielsweise eine Lkw-Pritsche, einen Möbelkoffer, einen Kipper oder einen Transportbetonbehälter. Der Einsatz derartiger Wechselaufbauten ermöglicht es, das jeweilige Fahrzeug optimal auszunutzen und jeweils für den Benutzungsfall den gerade benötigten Wechselaufbau zur Verfügung zu haben. So ist beispielsweise in der Bauindustrie erwünscht, Transportfahrzeuge für unterschiedlichste Einsatzmöglichkeiten zur Verfügung zu haben. Um hohe Betonierkapazitäten abdecken zu können, die meist an bestimmten Terminen bei Fertigstellung von Bauabschnitten auftreten, wird die erforderliche Anzahl an im Fuhrpark vorhandenen Fahrzeugen mit einem Wechselaufbau mit einem Transportbetonbehälter ausgestattet. Ansonsten können dieselben Fahrzeuge in der übrigen Zeit als Fahrzeuge mit einem Pritschen- oder Kipperaufbau zum Transport von Schalmaterial, Bausteinen, Erdaushub oder ähnlichem Gut eingesetzt werden. Dadurch gestaltet sich der Einsatz derartiger Fahrzeuge wirtschaftlich, da nicht für jeden Einsatzzweck ein voll ausgerüstetes Fahrzeug angeschafft werden muß, sondern nur ein entsprechender Wechselaufbau.

Die konstruktive Verwirklichung derartiger Wechselsysteme gestaltet sich recht aufwendig. Dies liegt zum einen daran, daß bei Lastkraftwagenchassis, insbesondere für Wechselaufbauten verschiedener Ausgestaltung oft eine große Zahl von für das Fahrzeug notwendigen oder für die verschiedenen Ausgestaltungen erforderlichen Einrichtungen, wie beispielsweise Treibstofftanks, Batteriehalterungen, Luftkessel,Hydraulikpumpen, Steuerungen, Hydrauliktanks und dergleichen an bestimmten Stellen am Fahrzeug untergebracht werden müssen, so daß das für die Wechselaufbaukonstruktion zu Verfügung stehende Raumangebot relativ begrenzt ist. Hinzu kommt, daß eine Standardisierung nur schwer zu erreichen ist, da die Fahrzeugabmessungen und die Lage der zusätzlichen Einrichtungen und damit das Raumangebot für die Wechselaufbaukonstruktion von Fahrzeugtyp zu Fahrzeugtyp sehr schwankt, da die LKW-Hersteller bei der Konstruktion des Fahrgestells in diesem Bereich keine genormten Abmessungen oder Bauteilanordnungen verwenden müssen.

### STAND DER TECHNIK

Auf dem Markt sind Transportfahrzeuge der eingangs genannten Art bekannt, die als Transportbetonfahrzeuge ausgebildet sind. Hierbei ist wechselaufbauseitig ein Aggregat vorhanden, das den Betonbehälter in Drehung versetzen kann, um bei gefülltem Behälter ein vorzeitiges Erstarren des Betons zu verhindern. Gleichzeitig wird durch das permanente Drehen des Betonbehälters einer Entmischung entgegengewirkt. Dieses Aggregat ist nun über einen Kupplungsstrang mit dem Antriebsaggregat des Fahrzeugs gekuppelt. Die Kupplung des fahrzeugseitigen Antriebsaggregats mit dem wechselaufbauseitigen Abtriebsaggregat erfolgt im Bereich zwischen dem Führerhaus und dem vorderen Teil des Wechselaufbaus, in dem auch Hubeinrichtungen zum Auf- bzw. Absetzen des Wechselaufbaus angeordnet sind. Bei den bekannten Transportfahrzeugen erfolgt die Kupplung beider Aggregate manuell. Hierzu muß die Bedienperson nach dem Aufsetzen des Wechselaufbaus in den zwischen Führerhaus und Wechselaufbau vorhandenen Raum klettern. Bei den bekannten Transportfahrzeugen ist an das fahrzeugseitige Aggregat eine Gelenkwelle angelenkt, die um den Anlenkpunkt in jede beliebige räumliche Lage gedreht werden kann. Diese Gelenkwelle wird nun von der Bedienperson erfaßt und mittels einer manuell zu kuppelnden Schnellkupplung an das wechselaufbauseitige Antriebsaggregat angelenkt. In entsprechender Art und Weise wird auch manuell entkuppelt.

Der Kupplungs- bzw. Entkupplungsvorgang ist für die Bedienperson körperlich relativ anstrengend, da sie zunächst in den zwischen Führerhaus und Wechselaufbau vorhandenen Zwischenraum klettern muß. Bedingt durch die dort herrschenden beengten Raumverhältnisse hat die Bedienperson zum manuellen Kuppeln kaum Bewegungsfreiheit. Hinzu kommt, daß in diesem Bereich oftmals Auspuffkanäle oder sonstige Bauteile angeordnet sind, die bei Betrieb des Transportfahrzeuges sehr heiß werden können. Im Zusammenspiel mit den beengten Raumverhältnissen bedeutet dies für die Bedienperson eine erhöhte Verletzungsgefahr. Desweiteren besteht die Gefahr, daß Bauteile beschädigt werden können, für den Fall, daß versehentlich die Hubeinrichtungen zum Absetzen des Wechselaufbaus betätigt werden, ohne daß zuvor der Antriebsstrang entkuppelt worden ist.

In manchen Situationen ist es erforderlich, daß sich der Transportbetonbehälter mit einer höheren Drehzahl dreht. Hierzu ist am Wechselaufbau eine Steuereinrichtung vorgesehen, die auf das Antriebsaggregat des Fahrzeugs einwirkt. Insbesondere wird hierbei die Stellung des Gaspedals des Fahrzeugs durch einen auf das Gestänge des Pedals einwirkenden Kupplungsstrang verändert. Dieser Kupplungsstrang, der eine Kupplungsvorrichtung enthält, ist bei den bekannten Transportbetonfahrzeugen manuell zu kuppeln. Hierbei kommen Kupplungselemente zum Einsatz, von denen eines das andere gabelförmig umfaßt und durch das Einschieben eines Bolzens manuell gekuppelt wird. Auch in diesem Fall ist es erforderlich, daß die Bedienperson den Kupplungsvorgang durchführt um die Funktionsfähigkeit zu gewährleisten. Insbesondere beim Absetzen des Wechselaufbaus besteht auch hier die Gefahr, daß die Bedienperson das Entkuppeln des Kupplungsstrangs für die Steuereinrichtungen vergißt und dadurch der Kupplungsstrang beim Absetzen des Wechselaufbaus Schaden nimmt.

Aus den Patent Abstracts of Japan, Band 8, Nr. 54 (M 282) 1491, 10. März 1984 (JP-A-58 206 435), ist ein Trägerfahrzeug mit einem auf einem Zusatzrahmen befindlichen Betonmischer bekannt. Dieser Betonmischer wird über eine Gelenkwelle mit dem Nebenantrieb des Fahrzeugs in Verbindung gebracht. Hierbei sind zwei Keilwellenprofile innerhalb des Kupplungsstranges vorhanden, die manuell gekuppelt werden. Bei diesem Fahrzeug ist der Zwischenraum zwischen Führerhaus und Antriebsaggregat des Betonmischers relativ frei zugänglich.

Die US-A-4 069 885 zeigt einen Traktor, an den eine Arbeitseinheit teilautomatisch gekoppelt werden kann. Ein zu koppelnder Gelenkstrang ist von der Seite einer Arbeitseinheit her an Federn aufgehängt. Beim vom Fahrer beeinflußten Rücksetzvorgang des Traktors gelangt ein Kupplungsglied auf eine schiefe Ebene und wird in Richtung auf ein entsprechendes Kupplungsglied verschoben. Zusätzlich kommt ein räumliches Gelenksystem zum Einsatz, das die Kupplungselemente in ihre Kupplungsposition bringt. Bei diesem Traktor geht es somit darum, eine separate Arbeitsgerätschaft anzukuppeln, wobei der Kupplungsvorgang beim Rückwärtsfahren des Traktors erfolgt. Der eigentliche Kupplungsvorgang wird durch die Lenkbewegung des Fahrers maßgebend beeinflußt.

### DARSTELLUNG DER ERFINDUNG

Der vorliegenden Erfindung liegt die Aufgabe zugrunde, ein Transportfahrzeug entsprechend den Merkmalen des Oberbegriffes von Anspruch 1, welche aus JP-A-58 206 435 bekannt sind, anzugeben, das einen problemlosen Anschluß einer wechselaufbauseitigen Abtriebsvorrichtung bei beengten Platzverhältnissen ermöglicht, einen hohen Bedienungskomfort aufweist, zuverlässig gegen Fehlbedienung geschützt ist, die Sicherheit für das Bedienpersonal erhöht und mit geringem apparativen Aufwand einen zuverlässigen Kupplungsvorgang gewährleistet.

Das erfindungsgemäße Fahrzeug ist durch die Merkmale des Anspruchs 1 gegeben. Vorteilhafte Ausgestaltungen und Weiterbildungen sind Gegenstand der Unteransprüche.

Das erfindungsgemäße Transportfahrzeug zeichnet sich demgemäß dadurch aus, daß ein fahrzeugseitiges Kupplungselement und ein wechselaufbauseitiges Kupplungselement vorhanden sind und beide Kupplungselemente automatisch beim Aufsetzen/Absetzen des Wechselaufbaus gekuppelt/entkuppelt werden, eine Positioniereinrichtung mit einer Aufnahmeeinrichtung vorhanden ist, wobei das wechselaufbauseitige Kupplungselement in der Aufnahmeeinrichtung in einer zum Kuppeln geeigneten Position zumindest zeitweise unter einem vorgegebenen Raumwinkel und einer vorgegebenen Höhenlage form- oder kraftschlüssig lagerbar ist und die Positioniereinrichtung die Aufnahmeeinrichtung und damit das wechselaufbauseitige Kupplungselement wahrend des Wechselvorgangs (Entsperren, Entriegeln, Anheben bzw. Absetzen, Verriegeln, Sperren) in etwa der Höhenlage zuführt, die das wechselaufbauseitige Kupplungselement in gekuppelter Betriebsstellung einnimmt und die Höhenlage der Positioniereinrichtung beim Kupplungs-/Entkupplungsvorgang durch eine fahrzeugfeste Führungseinrichtung bestimmt wird und die Positioniereinrichtung bei angehobenem bzw. abgesetztem Wechselaufbau an einem wechselaufbaufesten Anschlag anliegt.

Durch das automatische Ineinandergreifen der Kupplungselemente beim Aufsetzen des Wechselaufbaus wird eine manuell durchzuführende Kupplung überflüssig. Die Bedienperson muß lediglich über eine Steuereinrichtung die Aufsetz- bzw. Absetzbewegung des Wechselaufbaus veranlassen, ohne daß eine zusätzlicher körperlicher Einsatz erforderlich ist. Der automatische Kupplungsvorgang erhöht den Bedienkomfort beim Wechseln derartiger Wechselaufbauten enorm. Gleichzeitig besteht für die Bedienperson keinerlei Verletzungsgefahr mehr. Durch die Zwangssteuerung in der Abfolge der einzelnen zum Auf- bzw. Absetzen des Wechselaufbaus erforderlichen Bewegungskomponenten ist eine Schädigung des Antriebsstranges mit Kupplungsvorrichtung und/oder des Kupplungsstranges für die Steuereinrichtungen ausgeschlossen. Darüber hinaus können die Kupplungselemente in räumlich beengten Platzverhältnissen zwischen Führerhaus und Wechselaufbau angeordnet werden, da die Bedienperson in diesem Bereich keine manuellen Tätigkeiten vornehmen muß.

In einer bevorzugten Ausgestaltung führt der Wechselaufbau beim Wechselvorgang eine Hub-/Senkbewegung und/oder eine Verriegelungs-/Entriegelungsbewegung und/oder eine Sperr-/Entsperrbewegung durch. Ein derartiges Wechselsystem ist in der europäischen Patentanmeldung 0 025 557 beschrieben. Der Kupplungs-/Entkupplungsvorgang erfolgt während einer der genannten Bewegungen oder während einer Kombination der genannten Bewegungen des Wechselaufbaus. Somit kann in einfacher Art und Weise der Kupplungs- bzw. Entkupplungsvorgang in den Bewegungsmechanismus beim Wechseln des Wechselaufbaus eingebunden werden.

Um zu konstruktiv einfachen Lösungen zu gelangen und gleichzeitig einen sicheren Kupplungsvorgang zu gewährleisten, ist in einer weiteren vorteilhaften Ausgestaltung der Erfindung das je.weilige fahrzeugseitige bzw. wechselaufbauseitige Kupplungselement in einer vorgebbaren Lage am Fahrzeug bzw. Wechselaufbau gelagert. Damit ist die Position jedes Kupplungselementes genau festgelegt, die einen zuverlässigen Kupplungsvorganggewährleistet.

Um im Laufe der Zeit möglicherweise auftretende Relativverschiebungen, die sich ungünstig auf den Kupplungsvorgang auswirken, zwischen dem fahrzeugseitigen und wechselaufbauseitigen Kupplungselement ausgleichen zu können oder um Positionsabweichungen der Kupplungselemente bei unterschiedlichen Fahrzeugtypen ausgleichen zu können, ist am Fahrzeug und/oder am Wechselaufbau eine Justiervorrichtung vorhanden, mittels derer die räumliche Lage der Kupplungsvorrichtung bzw. der Kupplungselemente einstellbar ist. Die Justiervorrichtung kann möglicherweise auftretende Lagefehler in axialer Richtung, Winkelfehler oder Versatz in X-, Y- und Z-Richtung ausgleichen.

Nach einem weiteren Merkmal der Erfindung kann die Kupplungsvorrichtung als kraft- oder formschlüssige Kupplung ausgebildet sein. Die gegenseitige Lagesicherung der jeweiligen Kupplungselemente wird durch die gesicherte Verbindung des Wechselaufbaus mit dem Trägerchassis gewährleistet.

Um einen möglicherweise auftretenden unrunden Lauf des Antriebsaggregats des Fahrzeugs, beispielsweise eines Verbrennungsmotors, ausgleichen zu können, weist die Kupplungsvorrichtung elastische Elemente auf, die aufgrund ihrer Materialeigenschaften beispielsweise Unebenheiten im Drehmomentverlauf weitgehend kompensieren.

Eine besonders einfache und robuste Ausführungsform zeichnet sich dadurch aus, daß die Kupplungsvorrichtung als Bolzenkupplung ausgebildet ist, die zwei flanschartige Kupplungshälften mit Bolzen bzw. entsprechenden Ausnehmungen für die Bolzen aufweist. Bevorzugt sind hierbei die Ausnehmungen in Form von Langlöchern ausgebildet. Die Ausbildung der Ausnehmungen in Form von Langlöchern ist dann von Vorteil, wenn die Antriebsachse des Fahrzeugs und damit auch die Antriebsachse des Wechselaufbaus gegenüber der Verschiebebewegung des Wechselaufbaus beim Kupplungsvorgang geneigt angeordnet ist. Dies ist bei vielen Fahrzeugtypen der Fall, wobei die Neigung im Bereich zwischen 3° und 7° liegt. Die Achsen der Bolzen bzw. Ausnehmungen der Kupplungselemente verlaufen parallel zu der geneigten Antriebs- bzw. Abtriebsachse. Wird nun die zu diesen Achsen geneigte Verschiebebewegung des Wechselaufbaus als eigentliche Kupplungsbewegung der Kupplungselemente benutzt, so können die geneigten Bolzen des fahrzeugseitigen Kupplungselements problemlos in die in Radialrichtung entsprechend angeordnete Langlöcher eingreifen.

Um den Verschleiß beim Kupplungsvorgang bzw. Entkupplungsvorgang hinsichtlich der Kupplungshälften möglichst gering zu halten, wird die Kupplungsvorrichtung bevorzugt bei Stillstand oder bei geringer Drehzahl der fahrzeugseitig vorhandenen Antriebsvorrichtung gekuppelt.

Um auch bei der Bolzenkupplung gewisse Dämpfungseigenschaften zu gewährleisten, sind nach einem weiteren Merkmal der Erfindung in den Ausnehmungen des einen Kupplungselementes elastisch verformbare Kunststoffbüchsen angeordnet.

Neben einer Bolzenkupplung, die die Übertragung einer Drehbewegung des Antriebsaggregats auf das Abtriebsaggregat gewährleistet, kommt in einer erfindungsgemäßen Weiterbildung des Transportfahrzeugs eine Kupplungsvorrichtung zum Einsatz, die fahrzeugseitig an das Gaspedal bzw. Gaspedalgestänge des Fahrzeugs angeschlossen ist, wobei das fahrzeugseitige Kupplungselement bei aufgesetztem Wechselaufbau in Kontakt steht, derart, daß eine von der wechselaufbauseitigen Steuereinrichtung ausgelöste Verschiebebewegung auf das Gaspedal bzw. das Gaspedalgestänge übertragen wird. Hierbei ergibt sich der Vorteil, daß die Kupplung beider Steuereinrichtungen automatisch beim Aufsetzvorgang des Wechselaufbaus erfolgt und somit die Bedienperson die Kupplung beider Steuereinrichtungen nicht manuell vornehmen muß.

Zu einer besonders einfachen konstruktiven Ausführungsform gelangt man, wenn beide Kupplungselemente jeweils ein verschiebbares Kontaktformteil aufweisen, wobei das Kontaktformteil innerhalb eines fahrzeugfesten bzw. wechselaufbaufesten Gehäuseelements angeordnet ist. Bevorzugt wird hierbei der Kontaktbereich des einen Kontaktformteils als Kontaktfläche ausgebildet und der Kontaktbereich des anderen Kontaktformteils als Spitze herausgebildet. Mit dieser Maßnahme werden die beim Aufsetzen des Wechselaufbaus unter Umständen entstehenden unterschiedlichen Lageanordnungen der Kupplungselemente ausgeglichen.

Um den Kontakt beider Kontaktformteile zu gewährleisten steht zumindest ein Kontaktformteil unter Wirkung einer Federeinheit.

Eine hinsichtlich ihrer konstruktiven Verwirklickung besonders einfache Ausführungsform des erfindungsgemäßen Transportfahrzeugs mit Kupplungsstrang zeichnet sich dadurch aus, daß der Kupplungsstrang zumindest bereichsweise als Bowdenzug ausgebildet ist. Neben der Ausbildung des Kupplungsstrangs als mechanische Verschiebeeinheit (Bowdenzug) ist auch eine Ausbildung des Kupplungsstrangs im Rahmen einer Pneumatik- oder Hydrauliklösung möglich, d. h. daß die Verschiebebewegung über Pneumatik- oder Hydraulikeinheiten ausgelöst wird.

Bevorzugt ist die Positioniereinrichtung gelenkig am Wechselaufbau gelagert, wobei das wechselaufbauseitige Kupplungselement beim Aufsetzen des Wechselaufbaus auf das Fahrgestell in Kupplungsposition geschwenkt wird. In einer besonders einfachen Ausgestaltung des Kupplungsstranges ist zwischen dem wechselaufbauseitigen Kupplungselement und dem anzutreibenden Aggregat am Wechselaufbau eine Gelenkwelle angeordnet.

Die Höhenlage der Positioniereinrichtung beim Kupplungs- bzw. Entkupplungsvorgang wird durch eine fahrzeugfeste Führungseinrichtung bestimmt, wobei die Positioniereinrichtung bei abgesetztem Wechselaufbau an einem wechselaufbaufesten Anschlag anliegt. Die Führungseinrichtung kann hierbei als Schleifbahn, Gleitbahn Rollbahn oder dergleichen ausgebildet sein. Bevorzugt ist die Führungseinrichtung so ausgebildet, daß nach dem Herstellen der Verbindung zwischen den Kupplungselementen die Aufnahmevorrichtung das wechselaufbauseitige Kupplungselement freigibt. In einer weiteren, besonders einfachen Ausgestaltung ist das wechselaufbauseitige Kupplungselement permanent in der Aufnahmeeinrichtung drehbar gelagert, wodurch das Herstellen und wieder Freigeben einer Verbindung bei jedem Entkupplungs-/Kupplungsvorgang entfällt.

In einer bevorzugten Ausgestaltung ist die Aufnahmeeinrichtung als form- oder kraftschlüssiges Greifelement ausgebildet, das sich nach dem Einführen der beiden Kupplungselemente automatisch löst und beim Entkuppeln automatisch greift.

Auch ist des möglich, daß die Aufnahmeeinrichtung das wechselaufbauseitige Kupplungselement formschlüssig von unten unter einem vorgegebenen Winkel und einer vorgegebenen Höhenlage bereichsweise aufnimmt.

Eine bevorzugte Ausgestaltung zeichnet sich dadurch aus, die Aufnahmeeinrichtung zumindest eine Lagerfläche aufweist, wobei diese Lagerfläche im entkuppelten Zustand an zumindest eine Anlagefläche des wechselaufbauseitigen Kupplungselements form- oder kraftschlüssig angeordnet ist und zumindest ein fahrzeugfester Anschlag vorhanden ist, der die Lagerfläche nach erfolgter Einführung des Kupplungselements fixiert, wodurch durch weitere Verschiebung des Wechselaufbaus der Form-bzw. Kraftschluß zwischen der Lagerfläche und der Anlagefläche aufgehoben wird.

Die Positionierungseinrichtung kann durch teleskopartig verschiebbare Profile, insbesondere Hohlprofile, ausgebildet sein, innerhalb denen die Gelenkwelle läuft. Die Profile stehen unter der Einwirkung einer Federeinheit. Dieses hat den Vorteil, daß die Gelenkwelle weitgehend vor Verschmutzungen geschützt ist. Die Lagerfläche wird durch die entsprechend abgesägten Endbereiche eines Profils gebildet.

Erfindungsgemäß wird für den Antrieb des Verschiebesystems ein eigener Antrieb eingesetzt, so daß das fahrzeugseitige Kupplungselement sich beim Kupplungs- bzw. Entkupplungsvorgang in Ruhe befindet, da der Motor des Fahrzeuges abgeschaltet ist.

Durch das Zusammenwirken der Positioniereinrichtung und der Führungseinrichtung ist es möglich, daß das dem Fahrzeug zugewandte Ende der wechselaufbauseitigen Gelenkwelle und damit das an-diese Gelenkwelle anschließende wechselaufbauseitige Kupplungselement beim Anheben des Wechselaufbaus zum Absetzen etwa in der Höhe seiner Betriebslage bleibt. Auf diese Weise kann bei geringstem Raumbedarf eine Gelenkwelle in Richtung eines weit unter der Fahrzeugrückwand liegenden Nebenantriebs zum Anschluß gebracht werden.

Das Positionieren des wechselaufbauseitigen Kupplungselements in der Aufnahmeeinrichtung vor dem Kupplungsvorgang geschieht bevorzugt von Hand. Für das Aufschieben ist eine sehr genaue Positionierung des Kupp- lungselements erforderlich. Da die Positioniereinrichtung zum Wechselaufbau gehört und sich am vorderen Ende des Wechselaufbaus befindet, ist sie sehr gut bei abgestelltem Wechselaufbau zugänglich, wodurch die Positionierung von Hand keine Probleme bereitet. Das Abziehen der Gelenkwelle vom fahrzeugseitigen Antrieb ist unproblematisch. Die Gelenkwelle mit wechselaufbauseitigem Kupplungselement kann sich dabei in undefinierter Lage in die Aufnahmeeinrichtung legen.

Erfindungsgemäß kann somit eine automatische Verbindung des fahrzeugseitigen Antriebs und des wechselaufbauseitigen Abtriebs über eine Gelenkwelle erfolgen. Hierzu eignet sich besonders vorteilhaft ein Wechselsystem, das Wechselaufbauten durch Längsverschieben gegenüber dem Fahrzeugchassis verriegelt bzw. entriegelt. Weiterhin wird erfindungsgemäß vorgeschlagen, sich vom Fahrzeugmotor als Antriebsquelle für den Wechselvorgang zu lösen und diesen mit einem separaten Antriebsaggregat (Elektrohydraulikaggregat oder Kraftspeicher) zu betreiben, so daß der Fahrzeugmotor zumindest während des Verriegelungs-/Entriegelungsvorgangs des Wechselaufbaus nicht betrieben werden muß, d.h. der Antriebszapfen des Nebenantriebs sich während des Kupplungsvorgangs mit den Kupplungselementen und der Gelenkwelle in Ruhe befindet oder mit geringer Drehzahl dreht.

Bevorzugt ist das fahrzeugseitige Kupplungselement als Schiebestück mit Profilierung und das aufbauseitige Kupplungselement als Muffe mit entsprechender Profilierung oder umgekehrt ausgebildet.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Eine vorteilhafte Ausführungsform der Erfindung wird im folgenden anhand des in der Zeichnung dargestellten Beispiels näher erläutert und beschrieben. Es zeigen:
- Fig. 1: Seitenansicht eines Transportfahrzeugs mit einem als Transportbetonbehälter ausgebildeten Wechselaufbau und einem automatisch kuppelbaren Kupplungsstrang,
- Fig. 2: schematische Seitenansicht des Kupplungsstrangs gemäß Fig. 1 in vergrößerter Darstellung, wobei als Kupplungsvorrichtung eine Bolzenkupplung vorhanden ist,
- Fig. 3: perspektivische Darstellung der beiden Kupplungshälften der Bolzenkupplurig gemäß Fig. 2,
- Fig. 4: schematische Längsschnittdarstellung durch eine Kupplungsvorrichtung, die zum Übertragen einer Verschiebebewegung geeignet ist,
- Fig. 5: schematisch dargestellter Querschnitt der Kupplungsvorrichtung gemäß Fig. 4,
- Fig. 6 bis 8: schematische Seitenansicht eines Kupplungsstranges mit einer wechselaufbauseitigen Gelenkwelle und einer Positioniereinrichtung mit einer als Formstück ausgebildeten Aufnahmeeinrichtung zur Aufnahme eines wechselaufbauseitigen Kupplungselements von unten,
- Fig. 9: schematische Seitenansicht eines Kupplungsstranges mit einer wechselaufbauseitigen Gelenkwelle und einer Positioniereinrichtung mit einer als Formstück ausgebildeten Aufnahmeeinrichtung zur Aufnahme eines wechselaufbauseitigen Kupplungselements von unten während des Entkupplungsvorgangs, wobei die Gelenkwelle ein Keilwellenschiebestückaufweist,
- Fig. 10: schematische Seitenansicht eines Kupplungsstranges mit einer wechselaufbauseitigen Gelenkwelle und einer Positioniereinrichtung mit einer als Endbereich eines teleskopartig ineinanderschiebbaren Profils ausgebildeten Aufnahmeeinrichtung zur Aufnahme eines wechselaufbauseitigen Kupplungselements durch Anpressen an am Kupplungselement vorhandene Gegenflächen,
- Fig. 11: schematische Seitenansicht eines Kupplungsstranges mit einer wechselaufbauseitigen Gelenkwelle und einer Positioniereinrichtung mit einer als Greifelement ausgebildeten Aufnahmeeinrichtung zur Aufnahme eines wechselaufbauseitigen Kupplungselements von oben,
- Fig. 12: schematische Seitenansicht eines Kupplungsstranges mit einer wechselaufbauseitigen Gelenkwelle und einer Positioniereinrichtung mit einer als Stäbe mit Lagerflächen ausgebildeten Aufnahmeeinrichtung zur Aufnahme eines wechselaufbauseitigen Kupplungselements durch Anpressen an am Kupplungselement vorhandene Gegenflächen,
- Fig. 13: schematische Seitenansicht eines Kupplungsstranges mit einer wechselaufbauseitigen Gelenkwelle und einer fahrzeugseitigen Gelenkwelle, wobei das fahrzeugseitige Kupplungselement fest in einem Lager angeordnet ist,
- Fig. 14: schematische Seitenansicht eines Kupplungsstranges mit einer wechselaufbauseitigen Gelenkwelle und einer Positioniereinrichtung, die auf der Höhe der wechselaufbauseitigen Gelenkwelle drehbar gelagert ist und eine Aufnahmeeinrichtung aufweist, die das wechselaufbauseitige Kupplungselement permanent umschließt, und
- Fig. 15: Draufsicht auf ein Kupplungsstrang gemäß Fig. 14.

### WEGE ZUM AUSFÜHREN DER ERFINDUNG

Ein Transportfahrzeug 10 mit einem Führerhaus 12, einem Fahrzeugrahmen 14 weist einen Transportbetonbehälter 16 auf, der auf einem Wechselrahmen 18 angeordnet ist, der lösbar auf den Fahrzeugrahmen 14 aufsetzbar ist. Wechselrahmen 18 und Transportbehälter 16 bilden einen Wechselaufbau 19, der mittels Kolben-Zylinder-Aggregaten verschoben (Bewegungsrichtung V) und angehoben bzw. abgesenkt (Bewegungsrichtung H) werden kann. Der Übersichtlichkeit halber ist lediglich im vorderen Bereich zwischen dem Führerhaus 12 und dem Transportbetonbehälter 16 ein Kolben-Zylinder-Aggregat 20 schematisch dargestellt, das auf den Wechselrahmen 18 einwirkt, wobei auch hier aus Übersichtlichkeitsgründen der Wechselrahmen 18 nicht vollständig gezeichnet ist. Ebenso sind im hinteren Bereich des Transportfahrzeuges 10 nicht dargestellte Kolben-Zylinder-Aggregate vorhanden, die auf den Wechselrahmen 18 einwirken.

Der Transportbetonbehälter 16 ist auf dem Wechselrahmen 18 drehbar gelagert. Ein in der Achse A des Transportbetonbehälters 16 angeordneter Drehmotor 22 versetzt den Transportbetonbehälter 18 in Rotation sobald dies erforderlich ist, um beispielsweise das Erstarren des Betons während der Fahrt vom Mischwerk zur Baustelle zu verhindern.

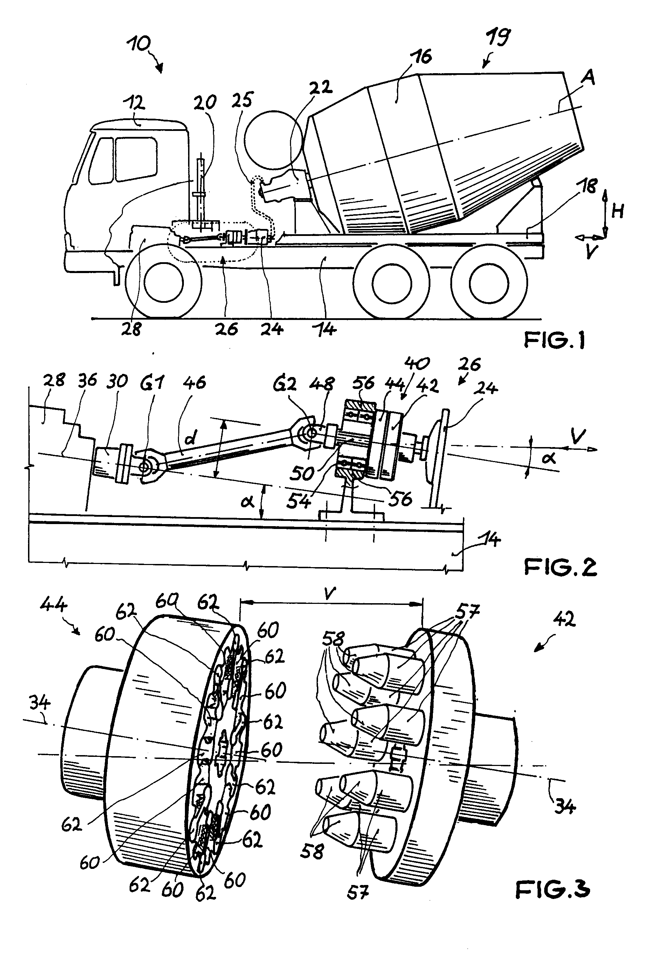

Der als Hydraulikmotor ausgebildete Drehmotor 22 wird über eine Pumpe 24, die über eine Leitung 25 an den Motor angeschlossen ist, mit Hydrauliköl versorgt. Diese Pumpe 24 wird über einen Kupplungsstrang 26 mit dem Motor 28 des Transportfahrzeugs 10 gekuppelt. Der Motor 10 treibt eine Antriebswelle 30 an, deren Achse 36 gegenüber der Oberkante des Fahrzeugrahmens 14 um den Winkel α geneigt ist (in Fig. 3 ca. 7°). Die gleiche Neigung α weist die Drehachse 34 der Pumpe 24 auf.

An die Pumpe 24 ist eine Kupplungsvorrichtung 40 mit einem ersten Kupplungselement 42 angeflanscht. Mit dem ersten Kupplungselement 42 steht ein zweites Kupplungselement 44 in Eingriff. In gekuppeltem Zustand liegen die Drehachse beider Kupplungselemente in Richtung der Drehachse 34 der Pumpe. In diesem Zustand weist die parallel zur Drehachse 34 der Pumpe 24 angeordnete Drehachse 36 der Welle 30 einen Versatz d auf. Um nun die Drehbewegung der Antriebswelle 30 des Motors 28 (Drehachse 36) auf die Abtriebswelle der Pumpe 24 (Drehachse 34) zu übertragen, ist eine an dem motorseitig vorhandenen Gelenkpunkt G1 kardanisch angelenkte Gelenkwelle 46 vorhanden. Das wechselaufbauseitige Ende der Gelenkwelle 46 bildet der Gelenkpunkt G2, der kardanisch an ein Formteil 48 angelenkt ist, das einen Vielkeilprofilbereich 50 aufweist, der in eine entsprechende am zweiten Kupplungselement 44 vorhandene Ausnehmung 52 eingreift. Das zweite Kupplungsteil 44 ist über ein Wälzlager 54 drehbar am Fahrzeug gelagert, wobei das Wälzlager 54 in einer Traverse 56 gelagert ist, die auf die auf beiden Seiten des Fahrzeugs 10 vorhandenen Fahrzeugrahmenträger 40 angeflanscht ist.

Die Kupplungsvorrichtung 40 ist als Bolzenkupplung ausgebildet. Dabei kommen Bolzen 57 zur Anwendung, die eine in ihrem Endbereich kegelstumpfförmige Anspitzung 58 aufweisen. Beim Kuppeln greifen die Bolzen 57 des ersten Kupplungselements 42 in entsprechende am zweiten Kupplungselement 44 vorhandene langlochförmige Ausnehmungen 60 ein. Zwischen den einzelnen Ausnehmungen 60 des zweiten Kupplungselements 44 sind elastische Gummielemente 62 angeordnet, die in ihrem dem ersten Kupplungselement 42 zugewandten Seitenbereich jeweils eine Fase aufweisen. Die Anordnung von derartigen Gummielementen 62 erlaubt ein relativ elastisches Arbeiten der Kupplung und gleicht die Unebenheiten des drehmomenten Verlaufs des Motors weitgehend aus. Die Fase der Gummielemente 62 in Verbindung mit der kegelstumpfförmigen Ausbildung 58 der Bolzen 57 garantiert ein sicheres Einkuppeln beim Kuppelvorgang. Ohne die Maßnahmen könnte es zu einem Verkanten beim Kupplungsvorgang kommen, was sich ungünstig auf die Dauerfestigkeit der Kupplungselemente bei häufigem Kupplungsvorgang auswirken würde, weil die Elemente nicht ohne Beschädigungen ineinandergreifen können. Das erfindungsgemäße Ausbilden der Bolzenenden als Spitze und der Gummielemente mit Fase als Scheide wirkt sich günstig auf den Einfädelvorgang beim Kuppeln aus.

Durch eine derartige Ausbildung und Lagerung der Kupplungsvorrichtung - fahrzeugfeste Lagerung des zweiten Kuppelelements und wechselaufbaufeste Lagerung des ersten Kupplungselements, erfolgt der Kupplungsvorgang automatisch beim Aufsetzen des Fahrzeugs, indem zum Verriegeln (Bewegungsrichtung V) des Wechselaufbaus die Verschiebebewegung durch die Kolben-Zylinder-Aggregate veranlaßt wird. Entsprechend erfolgt automatisch ein Entkuppeln der Kupplungselemente beim Entriegeln (Bewegungsrichtung V) des Wechselaufbaus. Die horizontale Verschiebebewegung des Wechselaufbaus wird deshalb durchgeführt, da bei dem gewählten Ausführungsbeispiel gemäß den Figuren 1 bis 3 nicht dargestellte Verriegelungsschuhe am Fahrzeugrahmen bzw. am Wechselaufbaurahmen vorhanden sind, die infolge der Verschiebebewegung miteinander in Eingriff gebracht bzw. voneinander gelöst werden.

Bei dem Ausführungsbeispiel gemäß den Figuren 1 bis 3 ist das erste, fahrzeugseitige Kupplungselement 42 als Element mit Bolzen 57 und das zweite, wechselanbauseitige Kupplungselement 44 als Element mit den Ausnehmungen 60 dargestellt. Die Anordnung der Elemente 42, 44 kann jedoch auch umgekehrt erfolgen.

Die dargestellte Ausführungsform als Bolzenkupplung erfaßt nur eine der vielen konstruktiven Alternativen. Grundsätzlich kann jede Kupplungsvorrichtung benutzt werden, bei der ein automatisches Kuppeln infolge Relativverschiebung zweier Kupplungshälften zueinander erfolgt, ohne daß im Anschluß daran noch zusätzlich Montagearbeiten erfolgen müssen.

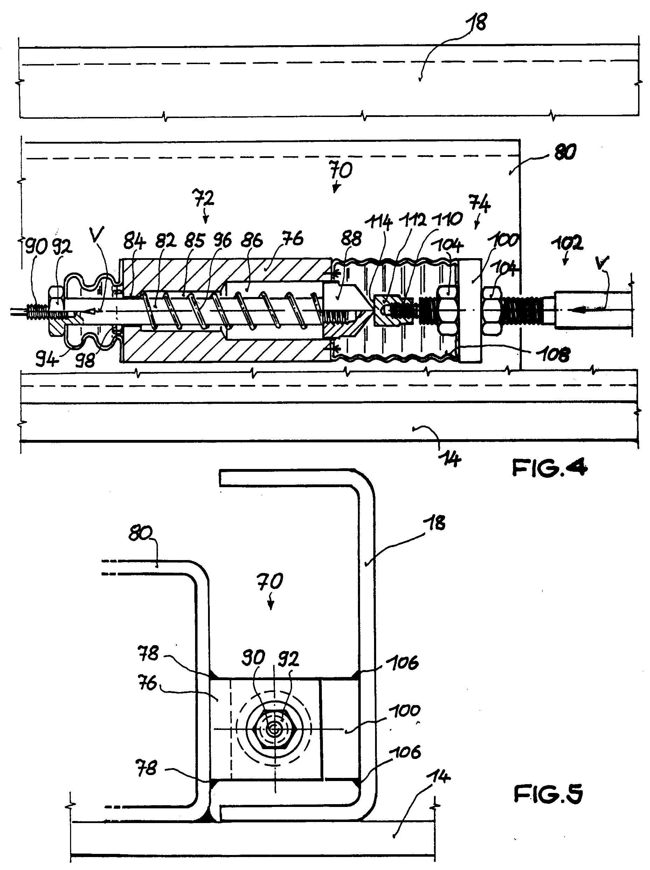

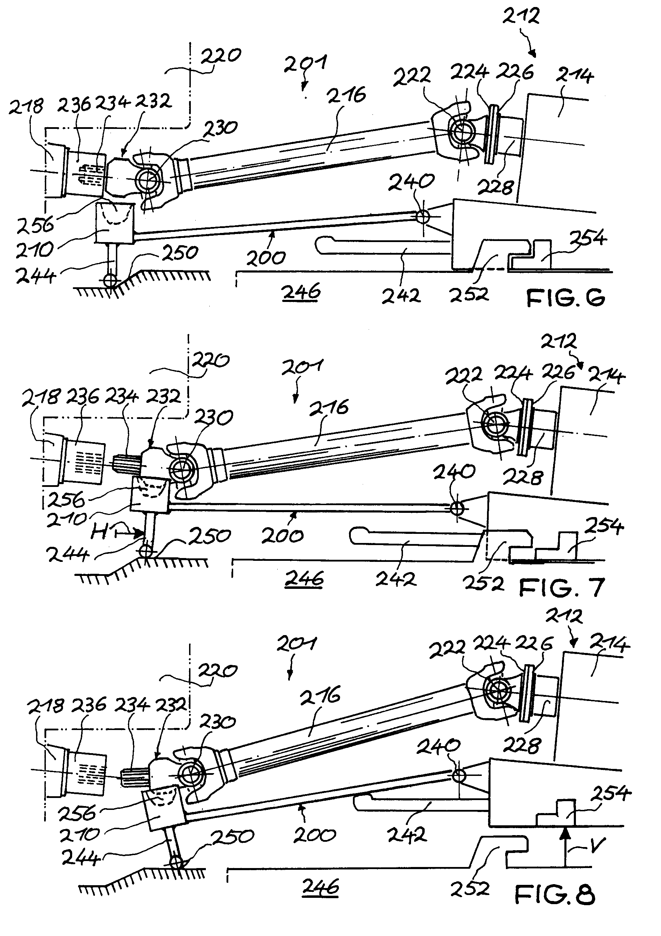

Bei der in den Figuren 4 und 5 dargestellten Kupplungsvorrichtung 70 mit einem fahrzeugseitig befestigten Kupplungselement 72 und einem wechselaufbauseitig befestigten Kupplungselement 74 wird eine von einer nicht dargestellten Steuereinrichtung ausgelösten Verschiebebewegung V von der Wechselaufbausteuerungseinrichtung ausgehend auf das Fahrzeug übertragen, wobei fahrzeugseitig Bauteile vorhanden sind, die diese Verschiebebewegung auf das Gaspedal bzw. das Gaspedalgestänge des Transportfahrzeugs übertragen. Dadurch ist es möglich, durch Ändern der Drehzahl des Antriebsaggregats des Fahrzeugs die Rotationsgeschwindigkeit des Transportbetonbehälters zu variieren.

Das fahrzeugseitige Kupplungselement 72 weist ein Gehäuseformteil 76 auf, das über Schweißnähte 78 an einem am Fahrzeugrahmen 14 befestigten Trägerelement 80 angeschlossen ist. Das Gehäuseformteil 76 weist eine durchgehende Bohrung auf, in der-ein Stabelement 82 in Richtung der Achse der Bohrung, die mit der Verschiebebewegungsrichtung V übereinstimmt, verschiebbar angeordnet ist. Die Bohrung weist einen relativ kurzen ersten Bereich 84 auf, dessen Durchmesser in etwa dem Durchmesser des Stabelements 82 entspricht. An diesen ersten Bereich 84 schließt sich ein zweiter Bereich 85 mit etwas größerem Durchmesser an, der in einen dritten Bereich 86 mit noch größerem Durchmesser übersetzt. Am rechten Ende des Stabelements 82 ist ein Kontaktformteil 88 aufgeschraubt, das bereichsweise im wesentlichen den selben Durchmesser hat wie der dritte Bereich 86 der Bohrung und in seinem nach außen weisenden Endbereich kegelförmig angespitzt ist. In seinem linken Endbereich weist das Stabelement 82 gegenüber der Stirnseite des Gehäuseformteils 76 einen Überstand auf. An der Stirnseite des Stabelements 82 ist ein Schraubstift 90 eingeschraubt, der über eine Mutter 92 gesichert ist. An den Schraubstift 90 ist ein in der Figuren 4 und 5 nicht dargestellter Bowdenzug angeschlossen, der auf das Gasgestänge der Transportmaschine einwirkt. Zwischen der Sicherungsmutter 92 und der linken Stirnseite des Gehäuseformteils 76 ist ein Gummibalg 94 angeordnet, der eine Verschmutzung des Stabelements 82 in diesem Bereich verhindert.

Auf die Länge des zweiten Bereiches 85 und des dritten Bereiches 86 der Bohrung ist um das Stabelement 82 herum eine Spiralfeder 96 angeordnet. Im Zusammenspiel mit einem quer zur Längsachse des Stabelements 82 angeordneten Bolzen 98 wird dadurch gewährleistet, daß das Stabelement 82 immer die gleiche Ausgangslage einnimmt, wobei in diesem Zustand der Bolzen 98 an die linke Stirnseite des Gehäuseformteils 76 gepreßt wird. Die Spiralfeder 96 könnte auch entfallen, da das fahrzeugseitige Kupplungselement 72 bzw. das Stabelement 82 in eingebautem Zustand unter der Wirkung einer auf das Gasgestänge einwirkenden Feder steht.

Das wechselaufbauseitige Kupplungselement 74 weist ein Plattenelement 100 mit Bohrung auf, durch die der Endbereich eines Bowdenzugs 102 hindurchgesteckt ist. Der Bowdenzug 102 weist in seinem Endbereich ein Außengewinde auf und ist mit auf beiden Seiten des Plattenelements 100 angeordneten Sicherungsmuttern 104 an das Plattenelement 100 angeschlossen. Das Plattenelement 100 ist über Schweißnähte 106 an dem Wechselrahmen bzw. Wechselrahmenträger 18 angeschlossen. Im Endbereich des inneren Verschiebeelements 110 des Bowdenzugs 102 ist ein Kontaktformteil 112 auf das Verschiebeelemente 110 geschraubt, das eine ebene Kontaktfläche 114 aufweist. Bei aufgesetztem Wechselaufbau herrscht Kontakt zwischen dieser Kontaktfläche 114 und der Kegelspitze des Kontaktformteils 88. Wird nun wechselaufbauseitig die Verschiebebewegung V ausgelöst, wirkt das Kontkatformteil 112 auf das Kontaktformteil 88 ein, wodurch sich das Stabelement 82 verschiebt. Diese Verschiebebewegung V wird dann über in Fig. 4 nicht dargestellte Bauteile auf das Gaspedal des Fahrzeugs übertragen. Um den Kontaktbereich vor Verschmutzung zu sichern, ist zwischen dem Gehäuseformteil 76 und dem Plattenelement 100 ein Gummibalg 108 angeordnet, der an das Gehäuseformteil 76 stirnseitig angeschlossen ist. Die Ausbildung des Endbereichs des Kontaktformteils als Kegelspitze hat den Vorteil, daß sich an derart geneigten Flächen weniger Schmutz absetzt und gleichzeitig eine unter Umständen auf der Kontaktfläche 114 des Kontaktformteils 102 vorhandene Schmutzpartikel von der Kegelspitze durchdrungen werden können, so daß immer ein einwandfreier Kontakt bei aufgesetztem Wechselaufbau gewährleistet werden kann.

In einer nicht dargestellten Ausführungsvariante ist ein fahrzeugseitig angeordnetes Kupplungselement mit einem Kontaktformteil mit ebener Kontaktfläche und ein wechselaufbauseitig angeordnetes Kupplungselement mit einem Kontaktformteil mit kegelförmiger Spitze vorhanden.

In den Figuren 6 bis 8 erfolgt der automatische Kupplungs-bzw. Entkupplungsvorgang bei einem Kupplungsstrang 201 mit Hilfe einer Positioniereinrichtung 200 mit einer Aufnahmeeinrichtung 210. Der Wechselaufbau 212 weist eine Pumpe 214 auf, die über eine Gelenkwelle 216 an den Nebenabtrieb 218 eines Motors unterhalb eines Führerhauses 220 anzukuppeln ist. Die Gelenkwelle 216 befindet sich in einer Z-Anordnung. Sie ist über ein Kreuzgelenk 222 mit Flansch 224 an einen Flansch 226 der Antriebswelle 228 der Pumpe 214 mittels nicht dargestellter Schrauben angeschlossen. Am fahrzeugseitigen Ende der Gelenkwelle 216 ist über ein Kreuzgelenk 230 ein wechselaufbauseitiges Kupplungselement 232 angelenkt. Das Kupplungselement 232 weist einen profilierten Wellenendbereich 234 auf, der in ein am Fahrzeug vorhandenes Kupplungselement 236 einschiebbar ist, das als Muffe mit entsprechend profilierter Innenwandung ausgebildet ist und an den Nebenabtrieb 218 angeflanscht ist.

Unterhalb der Gelenkwelle 216 ist die Positioniereinrichtung 200 mit Aufnahmeeinrichtung 210 über eine Gelenkachse 240 gelenkig an den Wechselaufbau 212 angeschlossen. Sie besitzt somit einen Freiheitsgrad. Unterhalb der Positioniereinrichtung 200 befindet sich ein wechselaufbaufester Anschlag 242, der die Lage der Positioniereinrichtung 200 und dadurch auch die Lage der fest mit dem Wechselaufbau 212 angeschlossenen Gelenkwelle 216 bei abgesetztem Wechselaufbau bestimmt. Wie in den Figuren 6 bis 8 schematisch dargestellt, stützt sich die schematisch dargestellte Aufnahmevorrichtung 210 über einen Kragarm 244 am Fahrgestell 246 des Transportfahrzeuges vorhandene Führungseinrichtung 250 ab, die bereichsweise eine als schiefe Ebene ausgebildete Schleifbahn 250 aufweist. Der Kragarm 244 und damit die Positioniereinrichtung 200 schleift beim Kupplungs- bzw. Entkupplungsvorgang zeitweise entlang dieser Führungseinrichtung 250. Fig. 6 zeigt die Gelenkwelle 216 in gekuppeltem Zustand. In diesem Zustand ist das Kupplungselement 232 in das Kupplungselement 236 eingeschoben, wobei zur Lagesicherung des Wechselaufbaus fahrzeugfeste Verriegelungselemente 252 und wechselaufbaufeste Verriegelungselemente 254 ineinandergreifen.

Der Absetzvorgang eines Wechselaufbaus 212 vom Fahrzeug läuft nun wie folgt ab. Zunächst wird der Wechselaufbau 212 durch Verschieben in Richtung H entriegelt, so daß die Verriegelungselemente 252 und 254 nicht mehr im Eingriff stehen. Dabei fällt die Gelenkwelle 216 mit dem Kupplungselement 232 auf einen Aufnahmebereich 256 der Aufnahmevorrichtung 210 in undefinierter Lage. Bei der Verschiebebewegung H gleitet die Aufnahmevorrichtung 210 über den Kragarm 244 an der schiefen Ebene der Führungseinrichtung 250 entlang, wodurch der Aufnahmebereich 256 dem Kupplungselement 232 zugeführt wird. Danach wird der Wechselaufbau 212 in Richtung V angehoben. Hierbei schwenkt die Positioniereinrichtung 200 um das Gelenk 240 nach unten und schleift gleichzeitig entgegen der Fahrtrichtung auf der fahrzeugfesten Schleifbahn entlang. Gegen Ende der Hubbewegung V hat sich die Positioniereinrichtung 200 so weit geschwenkt, daß sie an dem Anschlag 242 anliegt. Nun kann das Fahrgestell ausgefahren werden, selbst dann, wenn das Fahrgestell ein langes Fahrerhaus hat und sich noch ein Teil der Gelenkwelle mit dem Kupplungselement und der Positioniereinrichtung unter dem Fahrerhaus befindet, da das vordere Ende in diesem Zustand nahe der Chassisoberkante des Fahrzeugs liegengeblieben ist.

Beim Aufsetzen des Wechselaufbaus 212 wird zunächst sichergestellt, daß das Kupplungselement 232, das mit der Gelenkwelle 216 an den Wechselaufbau 212 angeschlossen ist, exakt im Aufnahmebereich 256 der Aufnahmevorrichtung 210 liegt. Dies ist in den Figuren 6 bis 8 nicht dargestellt, da dort der Entkupplungsvorgang gezeigt wird, bei dem das Kupplungselement in einer undefinierten Lage auf die Aufnahmevorrichtung 210 fällt. Das paßgenaue Einlegen des Kupplungselements 232 spielt im Gesamtablauf die entscheidende Rolle. Damit ist sichergestellt, daß beim weiteren Ablauf das Kupplungselement 232 aufgrund der vorbestimmten Bewegungsrichtung der Positioniereinrichtung 200 millimetergenau vor das abtriebsseitige Kupplungselement 236 des Fahrzeugs zu liegen kommt. Als weiterer Schritt wird nun das Fahrgestellt unter den Wechselaufbau wie üblich eingefahren. Ebenso erfolgt das Absenken des Wechselaufbaus über das Fahrgestellt in üblicher Weise. Sobald die Positioniereinrichtung 200 über den Kragarm 244 die Schleifbahn 250 auf dem Fahrgestellrahmen 246 berührt, schwenkt die Positioniereinrichtung 200 nach vorne. Beim weiteren Verriegelungsvorgang (entgegen Richtung H in Fig. 7) wird der profilierte Wellenendbereich 234 des Kupplungselements 232 in das Kupplungselement 236 geschoben. Um das Einführen zu vereinfachen bzw. ein Verkanten oder Verklemmen beim Einführvorgang zu verindern, sind die Flanken des profilierten Wellenendbereiches 234 und die innenseitigen Randkanten des Kupplungselements 236 angeschrägt. Die Positioniereinrichtung 200 schleift über den Kragarm 244 während des Verschiebens über die entsprechend geformte fahrzeugfeste Schleifbahn der Führungseinrichtung 250 und entfernt sich, sobald die beiden Kupplungselemente eingefädelt sind, so weit vom Kupplungselement 232, daß ein freies Durchdrehen möglich ist.

Beim Absetzen des Wechselaufbaus 212, d. h. beim Trennen der Kupplungselemente 232, 236 ist es erwünscht, daß die Positioniereinrichtung 200 nicht in Kontakt kommt mit der Gelenkwelle 216, was durch Ausbildung des Kragarms 244 als Kippnocken erreicht werden kann oder durch federnde Beaufschlagung der Positioniereinrichtung 200. Dies ist insbesondere dann erforderlich, wenn das wechselaufbauseitige Kupplungselement nicht rotationssymmetrisch ausgebildet ist. Hier muß die Positioniereinrichtung beim Kupplungsvorgang aufgrund der definierten Lage des Kupplungselements eine andere Stellung einnehmen als beim Entkuppeln, bei dem die Stellung des Kupplungselements eher zufällig ist.

Bei einer nicht dargestellten Ausführungsform befindet sich die Gelenkachse direkt unterhalb des Kreuzgelenkes, so daß beim Schwenken der Positioniereinrichtung keine Relativverschiebung zwischen Positioniereinrichtung und in der Aufnahmeeinrichtung befindlichem Kupplungselement stattfindet. Auch eine Anordnung der Gelenkachse in Höhe des Kreuzgelenkes ist möglich.

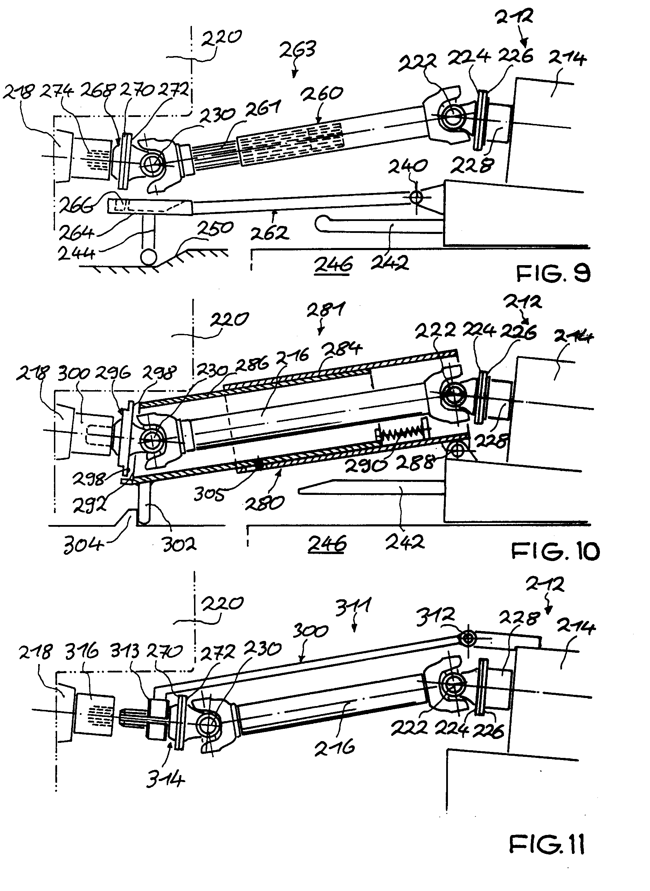

Der in Fig. 9 dargestellte Kupplungsstrang 263 enthält eine Gelenkwelle 260 mit einem Längsschiebestück 261. Eine derartige Gelenkwelle 260 ermöglicht einen gewissen Längenausgleich zwischen dem in der Regel elastisch gelagerten Motor des Fahrzeugs und dem relativ starr gelagerten Wechselaufbau 212. Auch die Kupplungselemente 236 und 232 können einen gewissen Längsausgleich bewirken. Auch hier ist ähnlich wie in der zuvor beschriebenen Ausführungsform eine Positioniereinrichtung 262 mit Aufnahmeeinrichtung 264 und einem Aufnahmebereich 266 für ein Kupplungselement 268 vorhanden. Gleiche Bauteile tragen das gleiche Bezugszeichen und werden nichts nochmals erläutert. Das wechselaufbauseitige Kupplungselement 268 ist über einen Flansch 270 an den Flansch 272 des Kreuzgelenkes der Gelenkwelle 260 angeschlossen. Entsprechend dem vorherigen Auführungsbeispiel greift dieses Kupplungselement 268 in ein im Fahrzeug fest vorhandenes Kupplungselement 274 ein. Kupplungs- und Entkupplungsvorgang laufen analog der oben geschilderten Vorgehensweise ab.

In der in Fig. 10 dargestellten Ausführungsvariante weist der Kupplungsstrang 281 eine Positioniereinrichtung 280 auf, die durch ein die Gelenkwelle 216 umgebende Profileinheit gebildet wird, bei der ein Außenrohr 284 und ein teleskopierbar in das Außenrohr 284 einschiebbares Innenrohr 286 vorhanden ist. Das Außenrohr 284 ist über ein Gelenk 288 an den Wechselaufbau 212 angeschlossen. Das Innenrohr 286 steht gegenüber dem Außenrohr 284 unter ständiger Einwirkung eines Feder 290. Eine Aufnahmeeinrichtung 292 wird durch den freien Endbereich 292 des Innenrohres 286 gebildet. Ein im Kreuzgelenk 230 der Gelenkwelle 216 angeschlossenes Kupplungselement 296 weist Anlageflächen 298 auf, die mit dem Endbereich 292 des Innenrohres 286 in Kontakt gebracht werden können. Der Endbereich 292 bzw. die Anlagefläche 289 sind so ausgebildet, daß bei anliegendem Kupplungselement 296 dieses die exakte Lage für den Kupplungsvorgang einnimmt. Dies wird dadurch erreicht, daß die Feder das Innenrohr 286 auf die Anlagefläche 298 des Kupplungselementes 296 preßt. Zum Kuppeln wird das Kupplungselement 296 mit seinem profilierten Wellenendbereich 234 in ein entsprechend ausgebildetes Kupplungselement 300 am Fahrzeug eingeschoben. Um ein Verdrehen zwischen Außenrohr 284 und Innenrohr 286 zu verhindern, ist eine Verdrehsicherung 305 vorhanden.

Das Innenrohr 286 weist unterseitig einen Anschlag 302 auf, der beim Kupplungsvorgang mit einem fahrzeugfesten Anschlag 304 in Kontakt kommt und zwar kurz vor Abschluß des Kupplungsvorganges. Durch die verbleibende Verschiebebewegung wird das Innenrohr 286 teleskopartig in das Außenrohr 284 geschoben. Dadurch gibt der Endbereich des Innenrohres das Kupplungselement 296 frei, so daß sich dieses drehen kann. Umgekehrt wird beim Entkuppeln infolge der Feder 290 das Innenrohr 286 zunächst aus dem Außenrohr 284 herausgeschoben, bis der Endbereich des Innenrohes 286 mit der Anlagefläche 298 des Kupplungselements 296 in Kontakt kommt und das Kupplungselement 296 exakt positioniert. Die weitere Bewegung des Wechselaufbaus bzw. der Positioniereinrichtung 280 beim Absetzen des Wechselaufbaus gleicht dem der oben beschriebenen Ausführungsbeispiele, nämlich schleifen des Anschlages 302 entlang einer Schleifbahn bis zum Erreichen eines wechselaufbauseitig vorhandenen Anschlages 242.

Die Ausführungsform gemäß Fig. 10 hat den Vorteil, daß sie gleichzeitig für den Fahrzustand des Fahrzeuges, in dem sich die Gelenkwelle dreht, als Abdeckung des Gelenkstranges dient: Gleichzeitig stellt sie im Fahrzustand des Fahrzeuges einen Teil der Geräuschkappselung der Triebwerksteile dar. Derartige Positioniereinrichtungen mit Aufnahmeeinrichtungen können für jedes Fahrzeug/Aufbaukombination individuell eingerichtet werden, wobei die Positioniereinrichtung mit Aufnahmeeinrichtung jeweils immer am Wechselaufbau angeschlossen ist. Es können auch standardisierte Bauelemente verwendet werden mit Stellelementen zur Feineinstellung und zur Justierung.

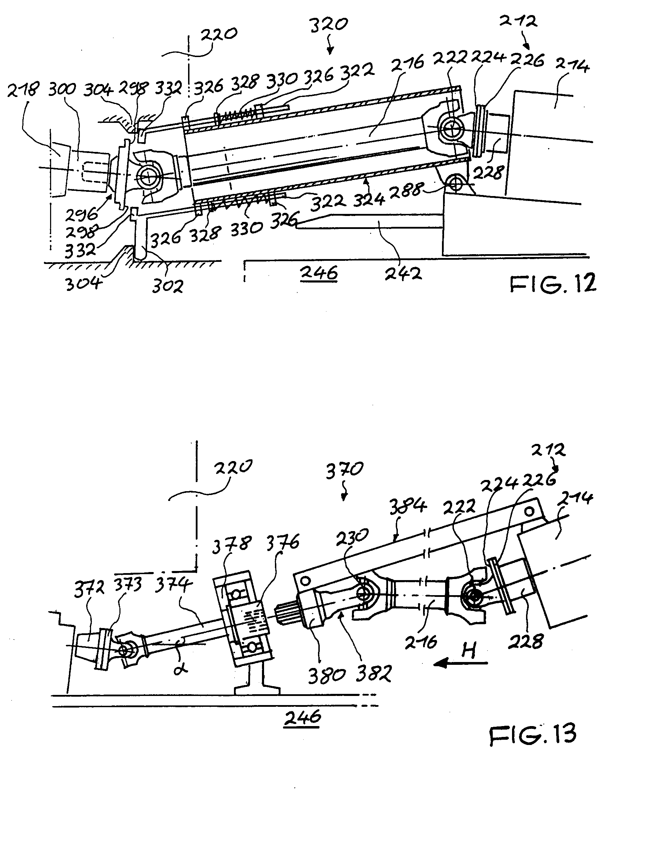

Wie in Fig. 11 schematisch dargestellt, kann ein Kupplungsstrang 311 eine Positioniereinrichtung 310 aufweisen, die oberhalb der Gelenkwelle 216 vorhanden ist und über ein Gelenk 312 an den Wechselaufbau 212 angeschlossen ist. Die Positioniereinrichtung 310 weist in ihrem vorderen Endbereich eine Aufnahmeeinrichtung 313 auf, die als Zangeneinrichtung 313 ausgebildet ist, die ein an die Gelenkwelle 216 angeschlossenes Kupplungselement 314 zangenartig umschließt. Das Kupplungselement 314 wird wiederum mit einem fahrzeugfesten muffenartig ausgebildeten Kupplungselement 216 mit entsprechend gearteter Innenwandung gekuppelt. Die Aufnahmevorrichtung 313 wird hierbei vor dem Kupplungsvorgang von Hand gespannt, so daß das Kupplungselement 314 seine exakte Lage hinsichtlich des Kupplungsvorgangs einnimmt. Hierzu weist die zangenförmige Aufnahmevorrichtung 313 in Richtung der Drehachse eine entsprechende Längenausdehnung auf, die ein unbeabsichtiges Verdrehen des Kupplungselements 314 verhindern. Beim Kupplungsvorgang selbst wird die zangenförmige Aufnahmevorrichtung 313 automatisch von dem Kupplungselement 314 über nicht dargestellte Anschläge oder Nocken gelöst, so daß sich das Kupplungselement 314 im gekuppelten Zustand frei drehen kann. Umgekehrt wird beim Entkupplungsvorgang nach dem Ausfahren des Kupplungselements 314 aus dem Kupplungselement 316 ein automatischer Schließvorgang der zangenförmigen Aufnahmeeinrichtung 313 mittels nicht dargestellter Anschläge bzw. Nocken durchgeführt. Die Positioniereinrichtung 310 gemäß Fig. 11 wird entsprechend der Positioniereinrichtung gemäß den Figuren 6 bis 9 über nicht dargestellte Führungselemente (wie Schleifbahn, Anschlag oder dergleichen) geführt. Es ist auch möglich, die Lage der Positioniereinrichtung bei abgesetztem Wechselaufbau mittels eines Zugankers zu fixieren.

Der in Fig. 12 dargestellte Kupplungsstrang 320 ähnelt dem der Fig. 10. Jedoch ist das Innenrohr aufgelöst in Stabelemente 322, die an der als Rohrprofil ausgebildeten Positioniereinrichtung 324 in jeweils zwei zueinander beabstandeten Kreisscheiben 326 parallel zur Positioniereinrichtung 324 und in ihrer Längsrichtung verschiebbar gelagert sind. Die Stabelemente 322 sind über ein Stellelement 328 in ihrer Längsposition gegenüber der Positioniereinrichtung 324 einstellbar, stehen unter der Wirkung einer Feder 330 und können entgegen der Wirkung der Feder in Längsrichtung verschoben werden. Aus Gründen des Schallschutzes und um die Gelenkwelle 216 vor Verschmutzung zu schützen, erstreckt sich die als Rohrprofil ausgebildete Positioniereinrichtung 324 von dem wechselaufbauseitigen Kreuzgelenk 222 bis fast kurz vor das dem Fahrzeug zugewandte Kreuzgelenk 230.

An dem dem Fahrzeug zugewandten Ende des Stabelements 322 ist ein Lagerelement 332 mit einer Lagerfläche angeordnet, das mit einer entsprechend am Kupplungselement 296 vorhandenen Anlagefläche 298 in Kontakt bringbar ist. Wie in Fig. 12 dargestellt, sind fahrzeugfeste Anschläge 304 vorhanden, die die Lagerelemente 322 kurz vor Abschluß des Kupplungsvorgangs entweder über einen am Stabelement 322 vorhandenen Anschlag 302 oder direkt das Lagerelement 332 in seiner Position fixieren, so daß durch weiteres Verschieben des Wechselaufbaus 212 bis hin zur endgültigen Kupplungsposition die Gelenkwelle 216 mit dem wechselaufbauseitigen Kupplungselement 296 weiter nach vorn verschoben wird, wodurch die Anlagefläche 298 des Kupplungselements 296 den Kontakt mit den Lagerelementen 332 verliert und frei drehbar wird. Insgesamt sind drei Stabelemente 322 vorhanden, wobei in Fig. 12 nur zwei dargestellt sind. Durch diese drei Lagerelemente kann eine Ebene definiert werden, so daß die Lage des Kupplungselements 296 mit einer ebenen Anlagefläche 298 in entkuppeltem Zustand eindeutig mittels der über die Stellelemente 328 in ihrer Längsrichtung verstellbaren Stabelemente 322 eindeutig bestimmt werden kann. Diese Ausführungsform ermöglicht eine weitgehende Standardisierung und vereinfacht die paßgenaue Montage erheblich.

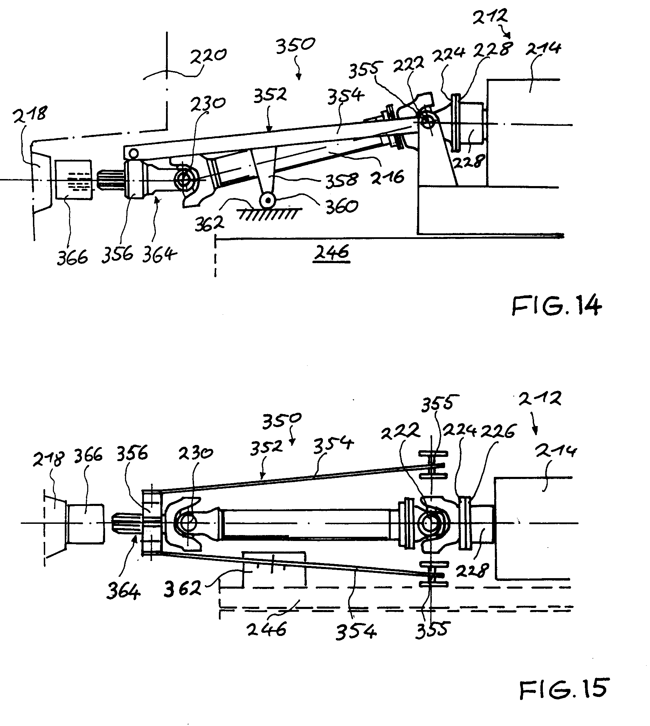

In einer alternativen Ausgestaltung eines erfindungsgemäßen Kupplungsstrangs 350 gemäß den Fig. 14 und 15 ist eine Positioniereinrichtung 352 vorhanden, die durch auf beiden Seiten der Gelenkwelle 216 angeordnete Stabelemente 354 gebildet wird. Wechselaufbauseitig sind diese Stabelemente im Gelenkpunkt 355 jeweils gelenkig an den Wechselaufbau 212 angeschlossen, wobei die durch die Gelenkpunkte 355 verlaufende Drehachse von einer Seitenansicht gesehen durch den Gelenkpunkt 222 der Gelenkwelle 216 verläuft. Weiterhin ist ein fahrzeugseitiges Kupplungselement 366 und ein wechselaufbauseitiges Kupplungselement 364 vorhanden, die ähnlich wie gemäß den Kupplungselementen der Fig. 11 ausgebildet sind. An dem dem fahrzeugseitigen Kupplungselement 366 zugewandten Endbereich der Stabelemente 354 ist eine als Drehlager ausgebildete Aufnahmeeinrichtung 356 fest angeschlossen, die einen Wellenbereich des wechselaufbauseitigen Kupplungselements 364 permanent umschließt. Ähnlich wie in den vorangegangenen Figuren dargestellt, ist auch hier ein Kragarm 358 schematisch dargestellt, der über eine Rolle 360 an einer fahrzeugfesten, als Anschlag 362 ausgebildeten Führungseinrichtung während des Kupplungsvorganges abrollt. Dadurch, daß die gelenkige Lagerung der Stabelemente 354 direkt auf Höhe der Gelenkachse der Gelenkwelle 216 liegt, findet bei der Schwenkbewegung der Positioniereinrichtung 352 während des Kupplungs-/Entkupplungsvorgangs keine Relativbewegung zwischen der Aufnahmeeinrichtung 356 und dem wechselaufbauseitigen Kupplungselement 364 statt. Insofern kann die Aufnahmeeinrichtung 356 fest an die Stabelemente 354 angeschlossen werden, wobei fest so definiert ist, daß nur noch vom Antriebsmotor ausgehende Schwingungen und geringe Axialverschiebungen, die durch Winkeländerung beim Kupplungsvorgang entstehen elastisch aufgenommen werden können.. Die Positionierung des wechselaufbauseitigen Kupplungselements 364 während des Kupplungsvorgangs ist somit immer gewährleistet. Der Schließ- und Lösvorgang der Aufnahmevorrichtung, wie bei dem Ausführungsbeispiel gemäß Fig. 11, kann entfallen. Die Positioniereinrichtung ist hierbei relativ torsionsweich ausgebildet. Weiterhin ist die Positioniereinrichtung senkrecht zur Schwenkachse relativ biegeweich ausgebildet. Dadurch können die Einwirkungen der Motorschwingungen aufgenommen werden. Jedoch ist die Steifheit so groß zu wählen, daß für die zum Kupplungsvorgang benötigte Genauigkeit nicht darunter leidet. Schließlich ist noch ein in den Fig. 14 und 15 nicht dargestellter Anschlag vorhanden, der die Lage der Positioniereinrichtung bei angehobenem bzw. abgesetztem Wechselaufbau bestimmt.

Weiterhin ist es möglich, daß im gekuppelten Zustand eine kraftschlüssige Verbindung zwischen Positioniereinrichtung und Aufnahmeeinrichtung gelöst wird, so daß die Aufnahmeeinrichtung die unter Umständen infolge Motorschwingungen auftretende Verschiebung größtenteils folgen kann. Diese Alternative ist in den Fig. 14 und 15 nicht dargestellt.

Bei dem in Fig. 13 dargestellten Kupplungsstrang 370 ist an ein fahrzeugseitig vorhandenes Abtriebselement 372 über ein Gelenkstück 373 eine Gelenkwelle 374 angeschlossen, an deren wechselaufbauseitigen Endbereich ein als Muffe ausgebildetes Kupplungselement 376 angeschlossen ist. Das Kupplungselement 376 ist in einem fahrzeugfesten Wälzlager 378 drehbar gelagert. Wechselaufbauseitig ist ein Kupplungselement 382 vorhanden, das von einer Aufnahmeeinrichtung 380 permanent umfaßt wird und in dieser drehbar gelagert ist. Das Kupplungselement 382 ist über die Gelenkwelle 216 an die Antriebswelle 228 der Pumpe 214 angeschlossen. Die Aufnahmeeinrichtung 380 wird über eine stabförmig ausgebildete, oberhalb der Gelenkwelle 216 angeordnete Positioniereinrichtung 384 in seiner Lage gehalten, wobei die Positioniereinrichtung 384 fest am Wechselaufbau 212 angeschlossen ist.

Bei dieser Ausgestaltung ist also lediglich bei der Montage des wechselaufbauseitigen Kupplungsstranges die Positioniereinrichtung 384 einmal in ihrer Lage zu fixieren. Dadurch wird das wechselaufbauseitige Kupplungselement 382 permanent in seiner Lage gesichert. Ebenso ist das fahrzeugseitige Kupplungselement 376 in seiner endgültigen Kupplungsposition fahrzeugfest drehbar in dem Wälzlager 378 vorhanden.

Die Richtung der Verschiebebewegung H zum Kuppeln der beiden Kupplungselemente 376, 382 ist gegenüber der Achse der beiden Kupplungselemente um den Winkel α geneigt. Um einen reibungslosen Kupplungsvorgang zu garantieren ist die Verbindung zwischen der Aufnahmeeinrichtung 380 und der Positioniereinrichtung 384 elastisch nachgiebig ausgebildet, was in Fig. 13 nicht dargestellt ist. Durch die elastische Nachgiebigkeit ist es möglich, daß das Kupplungselement 384 bei einem eventuellen Verkanten beim Kupplungsvorgang ausweichen kann und somit in das fahrzeugfeste Kupplungselement 378 eingeführt werden kann. Auch ist es möglich, die Lagerung der Positioniereinrichtung am Wechselaufbau so auszubilden, daß sich beim Kupplungsvorgang der Lagerpunkt etwas bewegen kann, um ein problemloses Einschieben des Kupplungselements 382 in das Kupplungselement 376 zu gewährleisten.

## Patentansprüche

1. Transportfahrzeug (10) mit
- einem Fahrgestell (14; 246) mit Wechselvorrichtung,
- einem auf das Fahrgestell (14; 246) aufsetzbaren bzw. absetzbaren Wechselaufbau (19; 212) mit zumindest einem anzutreibenden Aggregat (22),
- einem Kupplungsstrang (26; 201; 263; 281; 311) zum Anschließen einer fahrzeugseitig vorhandenen treibenden Antriebsvorrichtung (28) an eine wechselaufbauseitig vorhandene anzutreibende Abtriebsvorrichtung (24; 214) und/oder zum Anschließen einer fahrzeugseitig vorhandenen Steuereinrichtung für die Antriebsvorrichtung an eine wechselaufbauseitig vorhandene Steuereinrichtung und
- einer innerhalb des Kupplungsstrangs (26; 201; 263; 281; 311) vorhandenen Kupplungsvorrichtung mit Kupplungselementen (42; 44; 232; 236; 268; 274; 296; 300; 314; 316),
**dadurch gekennzeichnet,** daß
- ein fahrzeugseitiges Kupplungselement (44; 236; 274; 300; 316) und ein wechselaufbauseitiges Kupplungselement (42; 232; 268; 296; 314) vorhanden sind und beide Kupplungselemente (42; 44; 232; 236; 268; 274; 296; 300; 314; 316) automatisch beim Aufsetzen/Absetzen des Wechselaufbaus (19) gekuppelt/entkuppeltwerden,
- eine Positioniereinrichtung (200; 262; 280; 300) mit einer Aufnahmeeinrichtung (210; 264; 292; 313) vorhanden ist, wobei das wechselaufbauseitige Kupplungselement (232; 268; 296; 314) in der Aufnahmeeinrichtung (210; 264; 292; 313) in einer zum Kuppeln geeigneten Position zumindest zeitweise unter einem vorgegebenen Raumwinkel und einer vorgegebenen Höhenlage form- oder kraftschlüssig lagerbar ist und die Positioniereinrichtung (200; 262; 280; 300) die Aufnahmeeinrichtung (210; 264; 292; 313) und damit das wechselaufbauseitige Kupplungselement (232; 268; 296; 314) während des Wechselvorgangs (Entsperren, Entriegeln, Anheben bzw. Ab setzen, Verriegeln, Sperren) in etwa der Höhenlage zuführt, die das wechsel-aufbauseitige Kupplungselement (232; 268; 296; 314) in gekuppelter Betriebsstellung einnimmt und
- die Höhenlage der Positioniereinrichtung (200; 262; 280; 300) beim Kupplungs-/Entkupplungsvorgang durch eine fahrzeugfeste Führungseinrichtung (250) bestimmt wird und die Positioniereinrichtung (200; 262; 280; 300) bei angehobenem bzw. abgesetztem Wechselaufbau (212) an einem wechselaufbaufesten Anschlag (242) anliegt.

2. Transportfahrzeug nach Anspruch 1,
**dadurch gekennzeichnet,** daß der Wechselaufbau beim Wechselvorgang eine Hub-/Senkbewegung (H) und/oder eine Verriegelungs-/Entriegelungsbewegung (V) und/oder eine Sperr-/Entsperrbewegung durchführt, wobei der Kupplungs-/Entkupplungsvorgang während nur einer der genannten Bewegungen oder während einer Kombination der genannten Bewegungen des Wechselaufbaus erfolgt.

3. Transportfahrzeug nach Anspruch 1 und/oder Anspruch 2,
**dadurch gekennzeichnet,** daß das jeweilige fahrzeugseitige und wechselaufbauseitige Kupplungselement in einer vorgebbaren Lage am Fahrzeug bzw. Wechselaufbau gelagert ist.

4. Transportfahrzeug nach Anspruch 1 und/oder 2,
**dadurch gekennzeichnet,** daß zumindest ein Kupplungselement elastisch gelagert ist und/oder die Kupplungsvorrichtung elastische Elemente (62) aufweist.

5. Transportfahrzeug nach Anspruch 3,
**dadurch gekennzeichnet,** daß am Fahrzeug und/oder am Wechselaufbau eine Justiervorrichtung vorhanden ist, mittels derer die räumliche Lage der Kupplungsvorrichtung bzw. der Kupplungselemente einstellbar ist.

6. Transportfahrzeug nach Anspruch 1,
**dadurch gekennzeichnet,** daß die Kupplungsvorrichtung als kraft- oder formschlüssige Kupplung ausgebildet ist.

7. Transportfahrzeug nach Anspruch 3,
**dadurch gekennzeichnet,** daß die Kupplungsvorrichtung als Bolzenkupplung (40) ausgebildet ist, die zwei flanschartige Kupplungshälften (42, 44) mit Bolzen (57) bzw. entsprechenden Ausnehmungen (60) aufweist.

8. Transportfahrzeug nach Anspruch 1,
**dadurch gekennzeichnet,** daß die Kupplungsvorrichtung fahrzeugseitig an das Gaspedal bzw. das Gaspedalgestänge des Fahrzeugs angeschlossen ist, wobei das fahrzeugseitige Kupplungselement mit dem wechselaufbauseitigen Kupplungselement bei aufgesetztem Wechselaufbau in Kontakt steht, derart, daß eine von der wechselaufbauseitigen Steuereinrichtung ausgelöste Verschiebebewegung auf das Gaspedal bzw. das Gaspedalgestänge übertragen wird.

9. Transportfahrzeug nach Anspruch 1,
**dadurch gekennzeichnet,** daß zwischen dem wechselaufbauseitigen Kupplungselement (232; 268; 296; 314) und dem anzutreibenden Aggregat (214) eine Gelenkwelle (216; 260) angeordnet ist.

10. Transportfahrzeug nach Anspruch 1,
**dadurch gekennzeichnet,** daß das wechselaufbauseitige Kupplungselement (314) permanent in der Aufnahmeeinrichtung (313) gelagert ist.

11. Transportfahrzeug nach Anspruch 1,
**dadurch gekennzeichnet,** daß die Führungseinrichtung (250) so ausgebildet ist, daß nach dem Herstellen der Verbindung zwischen den Kupplungselementen die Aufnahmevorrichtung (210; 264; 292; 313) das wechselaufbauseitige Kupplungselement (232; 268; 296; 314) freigibt.

12. Transportfahrzeug nach Anspruch 1,
**dadurch gekennzeichnet,** daß die Aufnahmeeinrichtung zumindest eine Lagerfläche (292) aufweist, wobei diese Lagerfläche (292) im entkuppelten Zustand an zumindest eine Anlagefläche (298) des wechselaufbauseitigen Kupplungselements (296) form- oder kraftschlüssig angeordnet ist und zumindest ein fahrzeugfester Anschlag (304) vorhanden ist, der die Lagerfläche nach erfolgter Einführung des Kupplungselements (296) fixiert, wodurch durch weitere Verschiebung des Wechselaufbaus der Form- bzw. Kraftschluß zwischen der Lagerfläche (292) und der Anlagefläche (298) aufgehoben wird.

13. Transportfahrzeug nach Anspruch 12,
**dadurch gekennzeichnet,** daß
die Positioniereinrichtung (280) durch teleskopartig verschiebbare Profile (284; 286) gebildet wird, die unter der Einwirkung einer Federeinrichtung (290) stehen, und die zumindest eine Lagerfläche (292) durch den Stirnbereich zumindest eines Profils (286) gebildet wird.

14. Transportfahrzeug nach Anspruch 1,
**dadurch gekennzeichnet,** daß
das wechselaufbauseitige Kupplungselement (232; 268) vor dem Aufsetzvorgang des Wechselaufbaus (212) von Hand in die Aufnahmeeinrichtung (210; 264) form- oder kraftschlüssig eingelegt wird.

15. Transportfahrzeug nach einem oder mehreren der vorstehenden Ansprüche,
**dadurch gekennzeichnet,** daß
ein vom Fahrzeugantrieb getrenntes zumindest nur für den Verschiebevorgang wirksames Antriebsaggregat vorhanden ist, so daß für den Verschiebevorgang des Wechselaufbaus der Motor des Transportfahrzeuges nicht betrieben werden muß und das fahrzeugseitige Kupplungselement während des Verschiebevorgangs still steht oder mit geringer Drehzahl dreht.

## Claims

1. Transport vehicle (10) having
- an undercarriage (14; 246) with interchanging device,
- an interchangeable body (19; 212) which can be put in place on the undercarriage (14; 246) and/or removed therefrom and has at least one unit (22) which is to be driven,
- a coupling train (26; 201; 263; 281; 311) for connecting a driving input device (28) which is provided on the vehicle to an output device (24; 214) which is to be driven and is provided on the interchangeable body and/or for connecting a control device which is provided on the vehicle and is intended for the input device to a control device which is provided on the interchangeable body, and
- a coupling device which is provided within the coupling train (26; 201; 263; 281; 311) and has coupling elements (42; 44; 232; 236; 268; 274; 296; 300; 314; 316),
characterized in that
- a coupling element (44; 236; 274; 300; 316) on the vehicle and a coupling element (42; 232; 268; 296; 314) on the interchangeable body are provided, and the two coupling elements (42; 44; 232; 236; 268; 274; 296; 300; 314; 316) are coupled/uncoupled automatically when the interchangeable body (19) is put in place/removed,
- a positioning device (200; 262; 280; 300) with a receiving device (210; 264; 292; 313) is provided, it being possible for the coupling element (232; 268; 296; 314) on the interchangeable body to be mounted in a positively or frictionally locking manner in the receiving device (210; 264; 292; 313) in a position suitable for coupling, at least at times at a predetermined solid angle and a predetermined vertical position, and the positioning device (200; 262; 280; 300) delivering the receiving device (210; 264; 292; 313) and thus the coupling element (232; 268; 296; 314) on the interchangeable body, during the interchanging operation (releasing, unlocking, raising and putting in place, locking, securing), approximately into the vertical position which the coupling element (232; 268; 296; 314) on the interchangeable body assumes in the coupled operating position, and
- the vertical position of the positioning device (200; 262; 280; 300) during the coupling/uncoupling operation is determined by a guide device (250) on the vehicle, and the positioning device (200; 262; 280; 300) rests against a stop (242) on the interchangeable body (212) when the latter is raised or removed.

2. Transport vehicle according to Claim 1, characterized in that, during the interchanging operation, the interchangeable body carries out a raising/lowering movement (H) and/or a locking/unlocking movement (V) and/or a securing/releasing movement, the coupling/uncoupling operation taking place during only one of the abovementioned movements or during a combination of the abovementioned movements of the interchangeable body.

3. Transport vehicle according to Claim 1 and/or Claim 2, characterized in that the respective coupling element on the vehicle and on the interchangeable body is mounted in a predeterminable position on the vehicle and on the interchangeable body, respectively.

4. Transport vehicle according to Claim 1 and/or 2, characterized in that at least one coupling element is mounted elastically and/or the coupling device exhibits elastic elements (62).

5. Transport vehicle according to Claim 3, characterized in that there is provided on the vehicle and/or on the interchangeable body an adjustment device by means of which the spatial position of the coupling device and/or of the coupling elements can be adjusted.

6. Transport vehicle according to Claim 1, characterized in that the coupling device is designed as a frictionally locking or positively locking coupling.

7. Transport vehicle according to Claim 3, characterized in that the coupling device is designed as a bolt coupling (40) which exhibits two flange-like coupling halves (42, 44) with bolts (57) and corresponding recesses (60), respectively.

8. Transport vehicle according to Claim 1, characterized in that the coupling device, on the vehicle, is connected to the accelerator pedal and/or the accelerator-pedal linkage of the vehicle, the coupling element on the vehicle being in contact with the coupling element on the interchangeable body when the latter has been put in place, such that a displacement movement initiated by the control device on the interchangeable body is transferred to the accelerator pedal and/or the accelerator-pedal linkage.

9. Transport vehicle according to Claim 1, characterized in that an articulated shaft (216; 260) is arranged between the coupling element (232; 268; 296; 314) on the interchangeable body and the unit (214) which is to be driven.

10. Transport vehicle according to Claim 1, characterized in that the coupling element (314) on the interchangeable body is mounted permanently in the receiving device (313).

11. Transport vehicle according to Claim 1, characterized in that the guide device (250) is designed such that, after the connection between the coupling elements has been produced, the receiving device (210; 264; 292; 313) frees the coupling element (232; 268; 296; 314) on the interchangeable body.

12. Transport vehicle according to Claim 1, characterized in that the receiving device exhibits at least one bearing surface (292), said bearing surface (292), in the uncoupled state, being arranged in a positively or frictionally locking manner on at least one abutment surface (298) of the coupling element (296) on the interchangeable body, and provision being made for at least one stop (304) on the vehicle, which stop fixes the bearing surface after the coupling element (296) has been introduced, as a result of which, by further displacement of the interchangeable body, the positive locking or frictional locking between the bearing surface (292) and the abutment surface (298) is eliminated.

13. Transport vehicle according to Claim 12, characterized in that the positioning device (280) is formed by telescopically displaceable profiles (284; 286) which are under the influence of a spring device (290), and the at least one bearing surface (292) is formed by the end region of at least one profile (286).

14. Transport vehicle according to Claim 1, characterized in that, before the interchangeable body (212) is put in place, the coupling element (232; 268) on the interchangeable body is manually inserted in a positively or frictionally locking manner into the receiving device (210; 264).

15. Transport vehicle according to one or more of the preceding claims, characterized in that a drive unit which is separate from the vehicle drive and acts at least only for the displacement operation is provided, with the result that the engine of the transport vehicle does not have to be operated for the displacement operation of the interchangeable body and, during the displacement operation, the coupling element on the vehicle is at a standstill or rotates at a low rotational speed.

## Revendications

1. Véhicule de transport (10) avec
- un châssis (14 ; 246) pourvu d'un dispositif de remplacement,
- une carrosserie interchangeable (19 ; 212) pouvant être posée sur le châssis (14 ; 246) ou en être déposée, et pourvue d'au moins un organe (22) à entraîner,
- une ligne d'accouplement (26 ; 201 ; 263 ; 281 ; 311) pour raccorder un dispositif d'entraînement (28) menant, présent sur le véhicule, à un dispositif de sortie (24 ; 214) à mener, présent sur la carrosserie interchangeable, et/ou pour raccorder un dispositif, présent sur le véhicule, de commande du dispositif d'entraînement à un dispositif de commande présent sur la carrosserie interchangeable,
- et un dispositif d'accouplement présent dans la ligne d'accouplement (26 ; 201 ; 263 ; 281 ; 311) et comprenant des éléments d'accouplement (42, 44 ; 232, 236 ; 268, 274 ; 296, 300 ; 314, 316),
**caractérise** en ce que
- un élément d'accouplement (44 ; 236 ; 274 ; 300 ; 316) est présent sur le véhicule et un élément d'accouplement (42 ; 232 ; 268 ; 296 ; 314) est présent sur la carrosserie interchangeable, et les deux éléments d'accouplement (42, 44 ; 232, 236 ; 268, 274 ; 296, 300 ; 314, 316) sont automatiquement accouplés/désaccouplés lors de la pose/dépose de la carrosserie interchangeable (19),
- un dispositif de positionnement (200 ; 262 ; 280 ; 300) pourvu d'un dispositif récepteur (210 ; 264 ; 292 ; 313) est présent, l'élément d'accouplement (232 ; 268 ; 296 ; 314) de la carrosserie interchangeable pouvant être logé par engagement positif ou par adhérence dans le dispositif récepteur (210 ; 264 ; 292 ; 313) dans une position adéquate pour l'accouplement, au moins temporairement sous un angle solide prédéfini et à une position en hauteur prédéfinie, et le dispositif de positionnement (200 ; 262 ; 280 ; 300) amenant, pendant l'opération de remplacement (déblocage, déverrouillage, soulèvement, ou dépose, verrouillage, blocage), le dispositif récepteur (210 ; 264 ; 292 ; 313) et donc l'élément d'accouplement (232 ; 268 ; 296 ; 314) de la carrosserie interchangeable approximativement à la position en hauteur que prend l'élément d'accouplement (232 ; 268 ; 296 ; 314) de la carrosserie interchangeable en position de service accouplée,
- et la position en hauteur du dispositif de positionnement (200 ; 262 ; 280 ; 300) lors du processus d'accouplement/désaccouplement étant déterminée par un dispositif de guidage (250) solidaire du véhicule, et le dispositif de positionnement (200 ; 262 ; 280 ; 300) s'appliquant contre une butée (242) solidaire de la carrosserie interchangeable lorsque la carrosserie interchangeable (212) est soulevée ou, selon le cas, déposée.

2. Véhicule de transport selon la revendication 1, **caractérisé** en ce que la carrosserie interchangeable accomplit lors de l'opération de remplacement un mouvement de levage/abaissement (H) et/ou un mouvement de verrouillage/déverrouillage (V) et/ou un mouvement de blocage/déblocage, le processus d'accouplement/désaccouplement ayant lieu pendant un seul des mouvements précités ou pendant une combinaison des mouvements précités de la carrosserie interchangeable.

3. Véhicule de transport selon la revendication 1 et/ou la revendication 2, **caractérisé** en ce que l'élément d'accouplement du véhicule ou, respectivement, de la carrosserie interchangeable, est monté dans une position prédéfinissable sur le véhicule ou, respectivement, sur la carrosserie interchangeable.

4. Véhicule de transport selon la revendication 1 et/ou 2, **caractérisé** en ce qu'au moins un élément d'accouplement est monté élastiquement, et/ou le dispositif d'accouplement présente des éléments élastiques (62).

5. Véhicule de transport selon la revendication 3, **caractérisé** en ce qu'un dispositif d'ajustement est présent sur le véhicule et/ou sur la carrosserie interchangeable, dispositif qui permet de régler la position dans l'espace du dispositif d'accouplement ou encore des éléments d'accouplement.

6. Véhicule de transport selon la revendication 1, **caractérisé** en ce que le dispositif d'accouplement est conçu comme accouplement par engagement positif ou par adhérence.

7. Véhicule de transport selon la revendication 3, **caractérisé** en ce que le dispositif d'accouplement est conçu comme accouplement (40) à broches, qui présente deux moitiés d'accouplements (42, 44) du genre flasques, pourvus de broches (57) ou, respectivement, d'évidements correspondants (60).

8. Véhicule de transport selon la revendication 1, **caractérisé** en ce que le dispositif d'accouplement est raccordé, du côté du véhicule, à la pédale d'accélération ou encore à la tringlerie de pédale d'accélération du véhicule, l'élément d'accouplement du véhicule étant, lorsque la carrosserie interchangeable est posée, en contact avec l'élément d'accouplement de la carrosserie interchangeable de telle sorte qu'un mouvement de translation déclenché par le dispositif de commande présent sur la carrosserie interchangeable est transmis à la pédale d'accélération ou encore à la tringlerie de pédale d'accélération.

9. Véhicule de transport selon la revendication 1, **caractérisé** en ce qu'un arbre de transmission (216 ; 260) est disposé entre l'élément d'accouplement (232 ; 268 ; 296 ; 314) de la carrosserie interchangeable et l'organe (214) à entraîner.

10. Véhicule de transport selon la revendication 1, **caractérisé** en ce que l'élément d'accouplement (314) de la carrosserie interchangeable est monté de façon permanente dans le dispositif récepteur (313).

11. Véhicule de transport selon la revendication 1, **caractérisé** en ce que le dispositif de guidage (250) est conçu de telle sorte qu'à la suite de la réalisation de l'assemblage entre les éléments d'accouplement, le dispositif récepteur (210 ; 264 ; 292 ; 313) libère l'élément d'accouplement (232 ; 268 ; 296 ; 314) de la carrosserie interchangeable.

12. Véhicule de transport selon la revendication 1, **caractérisé** en ce que le dispositif récepteur présente au moins une face d'appui (292), cette face d'appui (292) étant, à l'état désaccouplé, disposée en adhérence ou en engagement positif contre au moins une face d'application (298) de l'élément d'accouplement (296) de la carrosserie interchangeable, et au moins une butée (304) solidaire du véhicule étant présente, qui fixe en position la face d'appui à la suite de l'introduction de l'élément d'accouplement (296), la liaison par engagement positif ou par adhérence entre la face d'appui (292) et la face d'application (298) étant supprimée par la poursuite du déplacement de la carrosserie interchangeable.

13. Véhicule de transport selon la revendication 12, **caractérisé** en ce que le dispositif de positionnement (280) est formé par des profilés (284 ; 286) à coulissement télescopique qui sont soumis à l'action d'un dispositif de ressort (290), et la ou une des faces d'appui (292) étant formée par la région frontale d'au moins un profilé (286).

14. Véhicule de transport selon la revendication 1, **caractérisé** en ce que l'élément d'accouplement (232 ; 268) de la carrosserie interchangeable est, avant le processus de pose de la carrosserie interchangeable (212), inséré à la main par engagement positif ou par adhérence dans le dispositif récepteur (210 ; 264).

15. Véhicule de transport selon une ou plusieurs des revendications précédentes, **caractérisé** en ce qu'est présent un organe d'entraînement séparé de l'entraînement du véhicule, du moins actif uniquement pour le processus de translation, de sorte qu'on ne doit pas faire fonctionner le moteur du véhicule de transport pour le processus de translation de la carrosserie interchangeable et donc que, pendant le processus de translation, l'élément d'accouplement du véhicule est immobile ou tourne à faible vitesse.
